# EUROPÄISCHE PATENTANMELDUNG

(11) **EP 3 451 703 A1**
(43) Veröffentlichungstag der Anmeldung: **06.03.2019**
(21) Anmeldenummer: 18176336.8
(22) Anmeldetag: 06.06.2018
(51) Int. Cl.: H04R 25/00, H01Q 1/27, H01Q 7/08, H01Q 1/40

(54) **HÖRGERÄT**

(30) Priorität: 01.09.2017 DE 102017215372
(71) Anmelder: Sivantos Pte. Ltd., Singapore 539775 (SG)
(72) Erfinder: SINGER, Erwin, 90542 Eckental (DE); SCHMITT, Christian, 91091 Grossenseebach (DE); SCHMIDT, Benjamin, 90552 Röthenbach an der Pegnitz (DE)
(74) Vertreter: FDST Patentanwälte

(57) **Zusammenfassung**

Ein besonders rationell herstellbares Hörgerät (1) umfasst eine Antenneneinrichtung (7) zur drahtlosen Datenübertragung, insbesondere mittels magnetischer Induktion, wobei die Antenneneinrichtung (7) einen Antennenkern (80) umfasst, der aus einem polymeren Matrixmaterial, in das ein weichmagnetischer Füllstoff eingebettet ist, gefertigt ist.

## Beschreibung

Die Erfindung bezieht sich auf ein Hörgerät mit einer Antennenanordnung zur drahtlosen Datenübertragung mittels magnetischer Induktion. Die Erfindung bezieht sich dabei insbesondere auf ein Hörgerät mit einem Gehäuse, das in ein Ohr einer das Hörgerät tragenden Person (im Folgenden auch "Anwender") einsetzbar ist.

Ein Hörgerät dient der Versorgung einer hörgeschädigten Person mit akustischen Umgebungssignalen, die zu einer Kompensation der jeweiligen Hörschädigung entsprechend verarbeitet und insbesondere verstärkt werden. Ein Hörgerät umfasst hierzu üblicherweise einen Eingangswandler, beispielsweise in Form eines Mikrofons, eine Signalverarbeitungseinheit mit einem Verstärker, sowie einen Ausgangswandler. Der Ausgangswandler ist in der Regel als Miniaturlautsprecher realisiert und wird auch als Hörer oder Receiver bezeichnet1 Er erzeugt insbesondere akustische Ausgabesignale, die zum Gehör des Patienten geleitet werden und bei diesem die gewünschte Hörwahrnehmung erzeugen.

Um den zahlreichen individuellen Bedürfnissen entgegenzukommen, werden unterschiedliche Bauformen von Hörgeräten angeboten. Bei BTE-Hörgeräten (Behind-The-Ear, auch Hinter-dem-Ohr bzw. HdO) wird ein Gehäuse mit Komponenten wie einer Batterie und der Signalverarbeitungseinheit hinter dem Ohr getragen. Je nach Ausgestaltung kann der Receiver entweder direkt im Gehörgang des Trägers angeordnet sein (sogenannte Ex-Hörer-Hörgeräte oder Receiver-in-the-Canal (RIC)-Hörgeräte). Alternativ ist der Receiver innerhalb des Gehäuses selbst angeordnet und ein flexibler, auch als Tube bezeichneter Schallschlauch leitet die akustischen Ausgabesignale des Receivers vom Gehäuse zum Gehörgang (Schlauch-Hörgeräte). Bei ITE-Hörgeräten (In-the-Ear, auch IDO bzw. In-dem-Ohr) wird ein Gehäuse, welches sämtliche funktionale Komponenten einschließlich des Mikrofons und des Receivers enthält, zumindest teilweise im Gehörgang getragen. CIC-Hörgeräte (Completely-in-Canal) sind den ITE-Hörgeräten ähnlich, werden jedoch vollständig im Gehörgang getragen.

Ein "Instant-Fit-Hörgerät" ist eine Bauform eines In-dem-Ohr-Hörgeräts, bei dem das Gehäuse eine nicht individuell angepasste Standard-Form aufweist, wobei ein flexibler Halteschirm, mit dem das Hörgerät im Gehörgang befestigbar ist, auf das Gehäuse aufgesetzt ist.

Häufig weisen Hörgeräte eine induktive Antenne zur drahtlosen Kommunikation mit einem anderen Gerät, beispielsweise mit einem Audiogerät, einer Fernsteuerung oder (bei einer binauralen Versorgung) mit einem zweiten Hörgerät auf. Die Antenne ist beispielsweise als eine Antennenspule oder Ringantenne ausgeführt. Eine derartige Ringantenne ist in einer herkömmlichen Bauform beispielsweise aus der EP 2 811 761 A1 bekannt.

Der Erfindung liegt die Aufgabe zugrunde, ein Hörgerät mit einer Antenneneinrichtung zur induktiven Datenübertragung anzugeben, das besonders rationell herstellbar ist.

Diese Aufgabe wird erfindungsgemäß gelöst durch die Merkmale des Anspruchs 1. Vorteilhafte Ausgestaltungen der Erfindung sind in den Unteransprüchen und der nachfolgenden Beschreibung dargelegt.

Das erfindungsgemäße Hörgerät umfasst eine Antenneneinrichtung zur drahtlosen Datenübertragung, insbesondere mittels magnetischer Induktion. Erfindungsgemäß umfasst die Antenneneinrichtung einen Antennenkern, der aus einem polymeren Matrixmaterial, in das ein weichmagnetischer Füllstoff eingebettet ist, gefertigt ist. Der Füllstoff liegt in einer bevorzugten Ausführungsform partikulär (d.h. als Pulver) vor. Als "weichmagnetischer Füllstoff" ist ein Füllstoff aus einem ferromagnetischen Material bezeichnet, d.h. aus einem Material, das sich in einem Magnetfeld leicht magnetisieren lässt, das jedoch nicht selbst ein Magnetfeld ausbildet. Als Füllstoff ist im Rahmen der Erfindung demnach insbesondere ein Metall oder ein keramischer Werkstoff (Ferrit) eingesetzt. Vorzugsweise ist als Füllstoff ein Pulver aus Hartferrit eingesetzt. Vorzugsweise ist der Antennenkern in einem Spritzgussverfahren hergestellt.

Durch die erfindungsgemäße Verwendung eines Kompositmaterials zur Herstellung des Antennenkerns werden vorteilhaft die mechanischen Eigenschaften des Matrixmaterials und die elektro-magnetischen Eigenschaften des Füllstoffs kombiniert. Insbesondere ist das eingesetzte Kompositmaterial im Vergleich zu herkömmlicherweise meist eingesetzten Ferritkernen weniger spröde. Durch das vergleichsweise mechanisch weichere Material ist das Risiko reduziert, dass der Antennenkern bei mechanischer Beanspruchung beschädigt wird - beispielsweise bei dessen Montage oder dessen Transport, oder wenn der Antennenkern herunterfällt. Die Montage des Hörgeräts wird durch den relativ unempfindlichen Antennenkern insgesamt vereinfacht.

Weiterhin wirkt das erfindungsgemäße Kompositmaterial vorteilhafterweise als akustische Dichtung, so dass der Antennenkern vorteilhafterweise selbst als akustische Dichtung einsetzbar ist, wodurch der Montageaufwand für das Hörgerät zusätzlich reduziert wird.

Durch die erfindungsgemäße Verwendung eines kunststoffbasierten Kompositmaterials als Antennenkern erschließt sich außerdem vorteilhafterweise ein großer Gestaltungsfreiraum in Hinblick auf die Formgebung des Antennenkerns. Beispielsweise kann die Konstruktion des Kerns sehr einfach an äußere Rahmenbedingungen angepasst werden, etwa an die Form eines Hörgerätegehäuses bei einem individuell angepassten IDO-Hörgerät. Durch den Gestaltungsfreiraum kann die Form des Antennenkerns zudem vorteilhaft in Hinblick auf eine Schirmung gegenüber elektromagnetischer Störung gestaltet werden. Dies zeigt sich insbesondere bei den typischerweise beengtem Bauraum bei IDO-Hörgeräten von Vorteil.

Je nach konstruktiver Ausgestaltung des Antennenkerns ist in einer bevorzugten Ausführungsform der Erfindung als Matrixmaterial ein thermoplastischer Kunststoff oder ein Elastomer eingesetzt. Vorzugsweise ist also das Matrixmaterial durch einen starren (vergleichsweise unflexiblen) Kunststoff, oder durch einen elastischen Kunststoff gebildet (durch ein Gummi-Material). Als Thermoplast ist beispielsweise ein Polyamid, insbesondere PA 6 oder PA 12 eingesetzt. Als Elastomer ist beispielsweise ein Fluorkautschuk eingesetzt (insbesondere "Viton" der Fa. DuPont).

Im Rahmen der Erfindung ist es auch möglich, dass der Antennenkern in einem Abschnitt aus einem Thermoplast und in einem anderen Abschnitt aus einem Elastomer gefertigt ist. In diesem Fall ist der Antennenkern insbesondere im Zuge eines Zwei-Komponenten-Spritzgussverfahrens hergestellt.

In einer bevorzugten Ausführungsform der Erfindung ist der Antennenkern als akustische Dichtung eingesetzt. In dieser Ausführungsform ist zweckmäßigerweise ein Elastomer als Matrixmaterial eingesetzt. Insbesondere ist dabei ein Schallkanal, der von einem Hörer des Hörgeräts zu einem Schallauslass des Hörgeräts führt, im Inneren des Antennenkerns geführt. Hierdurch wird der Herstellungs- und Montageaufwand des Hörgeräts erheblich reduziert, da der Antennenkern selbst als akustische Abdichtung fungiert, so dass auf weitere Maßnahmen, wie beispielsweise einen separaten Gummi-Schlauch oder einen Silikonklebstoff als akustische Dämmung, vorteilhaft verzichtet werden kann.

Zusätzlich oder alternativ ist der Antennenkern als ein mechanisch tragendes Bauteil eingesetzt, d.h. ein anderes Bauteil des Hörgeräts, beispielsweise ein Hörer des Hörgeräts, wird an dem Antennenkern montiert und von diesem gehalten. Hierzu ist vorzugsweise ein (im verarbeiteten Zustand hartes) Thermoplast als Matrixmaterial eingesetzt. Durch die Tragefunktion des Antennenkerns werden vorteilhaft besonders kompakte Bauformen des Hörgeräts realisiert.

Insbesondere ist es durch das erfindungsgemäße Kernmaterial möglich und in einer Weiterbildung der Erfindung auch so vorgesehen, dass der Antennenkern ein mechanisches Verbindungselement aufweist. Gemäß dieser Ausführungsform ist aus dem Antennenkern ein mechanisches Verbindungselement herausgeformt. Dabei ist das Verbindungselement einstückig mit dem Antennenkern verbunden. Vorzugsweise ist das Verbindungselement zur Ausbildung einer Schraub- oder einer Schnappverbindung eingerichtet.

Hier und im Folgenden ist mit dem Begriff "einstückig verbunden" eine monolithische Verbindung zweier Bauteile gemeint. Das heißt die beiden Bauteile (vorstehend der Antennenkern und das Verbindungselement) sind aus dem gleichen Material hergestellt und dabei insbesondere in einem gemeinsamen Herstellungsprozess ("in einem Guss") gefertigt.

In einer Ausführungsform weist der Antennenkern im Wesentlichen die Form eines beidseitig offenen Hohlzylinders auf, wobei sich der Hohlzylinder an einem Längsende zu einem Flansch aufweitet. Dabei ist ein Hörer ("Receiver") des Hörgeräts auf dem Flansch montierbar oder montiert, so dass von dem Hörer abgegebener Schall in einem Schallkanal im Inneren des Antennenkerns geführt ist. D.h. der von dem Hohlzylinder ausgebildete Hohlraum dient als Schallkanal. Durch das erfindungsgemäße Kernmaterial und durch dessen schalldämmende Wirkung ist hierbei insbesondere neben dem Antennenkern selbst keine weitere akustische Dichtung vorgesehen. Zudem wirkt der Antennenkern durch seine Konstruktion positiv auf die Magnetfeldformung und dient insbesondere als magnetische Abschirmung gegenüber dem Hörer. Durch den Hörer hervorgerufene elektromagnetische Störungen, die die mittels der Antenneneinrichtung durchgeführte induktive Datenübertragung beeinträchtigen würden, werden somit vorteilhaft unterdrückt.

Besonders vorteilhaft zeigt sich die Erfindung bei einem Hörgerät, das als ein sogenanntes "Instant-Fit-Hörgerät" ausgeführt ist. In dieser Ausführungsform umfasst das Hörgerät ein Gehäuse, das in einen Gehörgang einer das Hörgerät tragenden Person einsetzbar ist, einen lösbar an dem Gehäuse befestigten flexiblen Halteschirm zur Halterung des Gehäuses in dem Gehörgang, sowie ein gehäuseseitiges Verbindungselement, auf das der Halteschirm mit einem korrespondierenden schirmseitigen Verbindungselement aufsteckbar ist. Dabei ist das gehäuseseitige Verbindungselement einstückig mit dem Antennenkern verbunden. Der Herstellungsaufwand für ein solches Hörgerät ist gegenüber einer herkömmlichen Bauform vorteilhafterweise erheblich reduziert.

In einer weiteren vorteilhaften Ausführungsform umfasst das Hörgerät ein Gehäuse, das in einen Gehörgang einer das Hörgerät tragenden Person einsetzbar ist. Das Gehäuse umfasst eine einteilige Gehäuseschale ("Shell"), in der eine einen Hörer sowie die Antenneneinrichtung umfassende Baueinheit aufgenommen ist, wobei die Gehäuseschale eine erste frontseitige Öffnung, die mit einer Frontplatte ("Faceplate") verschlossen ist, sowie eine der ersten Öffnung im Wesentlichen gegenüberliegende zweite rückseitige Öffnung aufweist. Die Baueinheit ragt mit einem Haltestutzen aus der rückseitigen Öffnung heraus, wobei die Baueinheit durch einen außenseitig auf den Haltestutzen aufgesetzten Sicherungsring an der Gehäuseschale fixiert ist. Dabei ist der Haltestutzen einstückig mit dem Antennenkern verbunden. Das Hörgerät ist vorzugsweise auch in dieser Ausführungsform als ein Instant-Fit-Hörgerät mit einer nicht individuell angepassten Gehäuseschale und einem daran befestigbaren Halteschirm ausgeführt. In einer bevorzugten Kombination sind Haltestutzen und gehäuseseitiges Verbindungselement einstückig mit dem Antennenkern verbunden.

Nachfolgend werden Ausführungsbeispiele der Erfindung anhand einer Zeichnung näher erläutert. Darin zeigen:
- Fig. 1: in geschnittener Darstellung ein Hörgerät, umfassend eine durch eine Frontplatte verschlossene einteilige Gehäuseschale, in der eine einen Hörer und eine Antenneneinrichtung umfassende Baueinheit aufgenommen ist, die durch einen Sicherungsring fixiert ist, der auf einen aus der Gehäuseschale herausragenden Haltestutzen der Baueinheit aufgesetzt ist, und
- Fig. 2: in perspektivischer Einzeldarstellung einen Antennenkern der Antenneneinrichtung gemäß Fig. 1, wobei der Antennenkern aus einem elastischen Material gefertigt ist.

Einander entsprechende Teile sind in allen Figuren stets mit gleichen Bezugszeichen versehen.

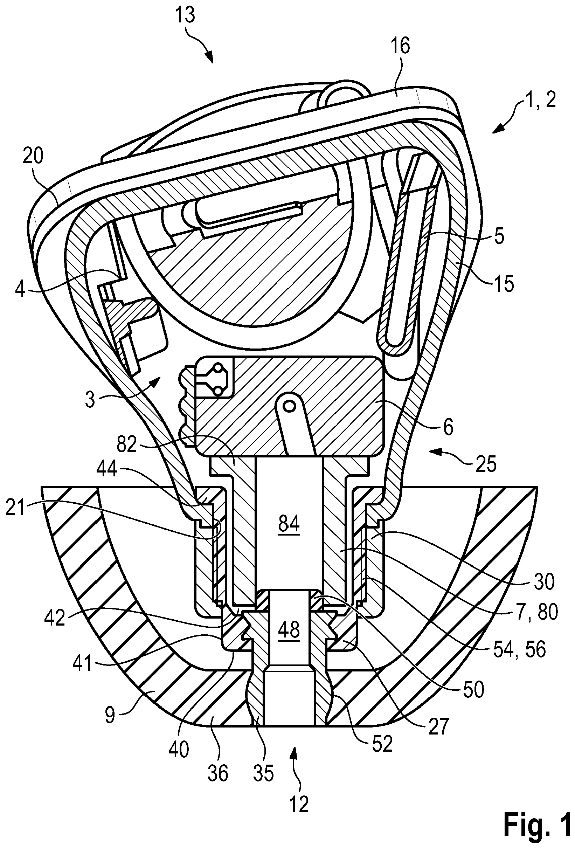

In Fig. 1 ist ein Hörgerät 1 gezeigt, dass ein Gehäuse 2 zur Aufnahme von Hörgerätekomponenten umfasst. In der Darstellung ist ein teilweise schematisch angedeuteter Längsschnitt durch das Hörgerät 1 gezeigt, so dass ein von dem Gehäuse 2 eingefasster Gehäuseinnenraum 3 und die darin ganz oder teilweise aufgenommenen Hörgerätekomponenten, umfassend ein Mikrofon 4, eine Signalverarbeitung 5, einen Hörer 6 ("Receiver") und eine Antenneneinrichtung 7 mit einer ringförmigen Induktionsspule sichtbar sind. Die Antenneneinrichtung 7 dient beispielsweise zur Kommunikation mit einem zweiten Hörgerät einer das Hörgerät 1 tragenden Person ("Anwender") mittels magnetischer Induktion oder zur Kommunikation mit einem anderen Peripheriegerät, beispielsweise einer Fernbedienung.

Bei dem Hörgerät 1 handelt es sich um ein in dem Gehörgang zu tragendes "In-dem-Ohr"-Hörgerät (ldO-Hörgerät), das als ein sogenanntes "Instant-Fit-Gerät" konzipiert ist. Das Gehäuse 2 ist entsprechend als ein nicht maßgefertigtes Standardteil hergestellt, wobei das Hörgerät 1 einen flexiblen Halteschirm 9 umfasst, der lösbar auf das Gehäuse 2 aufgesetzt ist. Der beispielsweise aus Silikon hergestellte Halteschirm 9 dient dazu, das Gehäuse 2, in dem Gehörgang des Anwenders zu fixieren.

Bei bestimmungsgemäß eingesetztem Hörgerät 1 ist eine als Rückseite 12 bezeichnete Seite des Gehäuses 2 dem Trommelfell des Anwenders zugewandt, während eine als Frontseite 13 bezeichnete Seite des Gehäuses 2 bestimmungsgemäß dem Ohreingang (der Ohrmuschel) zugewandt ist.

Das Gehäuse 2 umfasst eine einteilige Gehäuseschale 15 ("Shell"), sowie eine Frontplatte 16 ("Face-Plate") zum Verschluss der Gehäuseschale 15.

Die Gehäuseschale 15 hat in groben Zügen eine schlauchartige Form, die sich zur Rückseite 12 hin verjüngt. Die Gehäuseschale 15 weist eine erste, frontseitige (Montage-)Öffnung 20, sowie in etwa gegenüberliegend eine zweite, rückseitige (Montage-)Öffnung 21 auf. Die frontseitige Öffnung 20 dient zum Einsetzen der Hörgerätekomponenten in die Gehäuseschale 15.

Die rückseitige Öffnung 21 dient zur Montage des Hörers 6 und der Antenneneinrichtung 7. Hierzu umfasst das Hörgerät 1 eine Baueinheit 25, die ihrerseits einen aus der Öffnung 21 herausragenden Haltestutzen 27 umfasst, wobei die Antenneneinrichtung 7 in dem Haltestutzen 27 aufgenommen ist, und wobei der Hörer 6 an der Antenneneinrichtung 7 fixiert ist. Ein von der Rückseite 12 her auf den Haltestutzen 27 aufgesetzter Sicherungsring 30 dient dazu, die Baueinheit 25 an der Gehäuseschale 15 zu fixieren.

Weiterhin weist der Haltestutzen 27 ein außerhalb des Gehäuses 2 angeordnetes gehäuseseitiges Verbindungselement 35 auf, das mit einem schirmseitigen Verbindungselement 36 des Halteschirms 9 korrespondiert, so dass der Halteschirm 9 auf das Gehäuse 2, konkret auf das Verbindungselement 35, aufgeklickt werden kann.

Der Haltestutzen 27 ist als ein topfartiges oder becherförmiges Bauteil aus Kunststoff gefertigt. Der Haltestutzen 27 umfasst entsprechend einen flachen Boden 40, und eine an den Boden 40 angrenzende Umfangswand 41, die einen hohlzylindrischen Stutzeninnenraum 42 einfasst. Der Durchmesser des Haltestutzens 27 entspricht in etwa dem Durchmesser der Öffnung 21. An einen Rand der Umfangswand 41 ist ein umlaufender, radial nach außen abragender Anschlag 44 angeformt. Im Montagezustand steckt der Haltestutzen 27 in der Öffnung 21, wobei er mit seinem überwiegenden Teil aus der Gehäuseschale 15 herausragt und im Gehäuseinnenraum 3 mit dem Anschlag 44 an einem die Öffnung 21 umgebenden Rand der Gehäuseschale 15 anliegt.

In den Boden 40 des Haltestutzens 27 ist zentral eine kreisrunde (Schall-)Öffnung 48 eingebracht, die von einem zum Stutzeninnenraum 42 hin vertikal abragenden Kranz 50 eingefasst ist. Nach außen hin schließt an die Öffnung 48 das Verbindungselement 35 an. Bei dem Verbindungselement 35 handelt es sich um ein kurzes Rohrstück aus Metall, das koaxial mit dem Haltestutzen 27 ausgerichtet ist, wobei das Rohrstück mit der Öffnung 48 fluchtet. Das Verbindungselement 35 ist an einem ersten Längsende mit Hilfe von außenseitig umlaufenden Rippen in den Boden 40 des Haltestutzens 27 eingeformt. An seinem zweiten Längsende weitet sich der Innendurchmesser des Verbindungselements 35 in einer Stufe auf. In diesem Bereich ist die Außenfläche des Verbindungselements 35 unter Ausbildung eines Kugelgelenkkopfs 52 nach außen ausgewölbt. Das Verbindungselement 35 ist entsprechend auch als "Ball Spout" bezeichnet.

Der Haltestutzen 27 weist an einer Außenfläche der Umfangswand 41 ein Außengewinde 54 auf, auf das der Sicherungsring 30 mit einem entsprechenden Innengewinde 56 zur Fixierung des Haltestutzens 27 an der Gehäuseschale 15 von außerhalb des Gehäuses 2 aufgeschraubt ist.

In den Stutzeninnenraum 42 des Haltestutzens 27 ist die Antenneneinrichtung 7 eingesetzt, wobei beide Teile zumindest annähernd koaxial ausgerichtet sind.

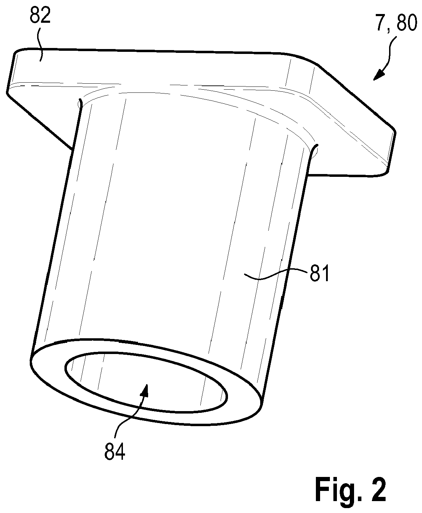

Die Antenneneinrichtung 7 umfasst eine zylindrische Induktionsspule (hier nicht explizit dargestellt), sowie einen ebenfalls im Wesentlichen hohlzylindrischen Antennenkern 80, um den die Induktionsspule gewickelt ist. Der Antennenkern 80 der Antenneneinrichtung 7 ist in Fig. 2 in einer Einzeldarstellung gezeigt.

Wie Fig. 2 zu entnehmen ist, weist der Antennenkern 80 die Form eines beidseitig offenen Hohlzylinders 81 auf, wobei sich der Antennenkern 80 an einem Längsende in einer Stufe zu einem Flansch 82 (auch "Kragen") aufweitet. Der Flansch 82 weist in Draufsicht eine in etwa rechteckige Außenkontur auf. Auf die durch den Flansch 82 gebildete Stirnfläche des Antennenkerns 80 ist in bestimmungsgemäßer Einbausituation der Hörer 6 montiert (wie in Fig. 1 gezeigt), so dass der von dem Hörer 6 erzeugte Schall in einen im Inneren des Antennenkerns 80 geführten Schallkanal 84 geleitet wird. Beispielsweise ist der Hörer 6 auf den Flansch 82 aufgeklebt. Optional sind an dem Flansch 82 Verbindungselemente aus dem Antennenkern 80 herausgeformt, an denen der Hörer 6 befestigt ist (beispielsweise aufgeklickt oder verschraubt). Vorteilhafterweise ist in diesem Fall der Hörer 6 einzeln (d.h. ohne den Antennenkern 80) austauschbar.

Der Antennenkern 80 ist in einem Spritzgussverfahren aus einem Verbundmaterial gefertigt, wobei ein partikulärer Füllstoff homogen in einem Matrixmaterial dispergiert ist. In dem Ausführungsbeispiel ist als Matrixmaterial ein Elastomer eingesetzt, insbesondere ein Fluorkautschuk, wie beispielsweise von der Fa. DuPont unter dem Handelsnamen "Viton" vertrieben. Als Füllstoff ist ein Hartferrit-Pulver eingesetzt.

Durch das gummiartige Matrixmaterial des Antennenkerns 80 wirkt dieser als akustische Dichtung, so dass der Hörer 6 ohne weitere Maßnahmen zur akustischen Dichtung unmittelbar auf dem Antennenkern 80 montiert wird. Der gummiartige Antennenkern wirkt im Ausführungsbeispiel einerseits an der Verbindungsstelle zwischen Hörer 6 und Antennenkern 80 als auch andererseits an der Verbindungsstelle zwischen Antennenkern 80 und dem Kranz 50 des Haltestutzens 27 dichtend. Ein Kunststoff- oder Gummischlauch, wie er herkömmlicherweise zwischen dem Hörer 6 und dem Antennenkern 80 vorgesehen ist, entfällt dabei. Weiterhin wirkt der Flansch 82 als ein Schild, der den Hörer 6 gegenüber der Antenneneinrichtung 7 magnetisch abschirmt.

In der dargestellten Ausführungsform ist das Verbindungselement 35 aus Metall gefertigt und in einem Spritzgussprozess in den Haltestutzen 27 eingebettet. Alternativ sind Verbindungselement 35 und Antennenkern 80 einstückig (monolithisch) gefertigt, beispielsweise als gemeinsam hergestelltes Spritzgussteil aus dem Material des Antennenkerns 80.

In einer weiteren Ausführungsform, die ebenfalls nicht explizit dargestellt ist, sind der Antennenkern 80 und der Haltestutzen 27 einstückig (monolithisch) gefertigt.

Wiederum alternativ sind der Haltestutzen 27 und das Verbindungselement 35 einstückig mit dem Antennenkern 80 gefertigt.

Die Erfindung wird an den vorstehend beschriebenen Ausführungsbeispielen besonders deutlich, ist auf diese Ausführungsbeispiele gleichwohl aber nicht beschränkt. Vielmehr können weitere Ausführungsformen der Erfindung aus den Ansprüchen und der vorstehenden Beschreibung abgeleitet werden.

### Bezugszeichenliste

- 1: Hörgerät
- 2: Gehäuse
- 3: Gehäuseinnenraum
- 4: Mikrofon
- 5: Signalverarbeitung
- 6: Hörer
- 7: Antenneneinrichtung
- 9: Halteschirm
- 12: Rückseite
- 13: Frontseite
- 15: Gehäuseschale
- 16: Frontplatte
- 20: (Montage-)Öffnung
- 21: (Montage-)Öffnung
- 25: Baueinheit
- 27: Haltestutzen
- 30: Sicherungsring
- 35: Verbindungselement
- 36: Verbindungselement
- 40: Boden
- 41: Umfangswand
- 42: Stutzeninnenraum
- 44: Anschlag
- 48: (Schall-)Öffnung
- 50: Kranz
- 52: Kugelgelenkkopf
- 54: Außengewinde
- 56: Innengewinde
- 80: Antennenkern
- 82: Flansch
- 84: Schallkanal

## Patentansprüche

1. Hörgerät (1),
mit einer Antenneneinrichtung (7) zur drahtlosen Datenübertragung, insbesondere mittels magnetischer Induktion,
wobei die Antenneneinrichtung (7) einen Antennenkern (80) umfasst, der aus einem polymeren Matrixmaterial, in das ein weichmagnetischer Füllstoff eingebettet ist, gefertigt ist.

2. Hörgerät (1) nach Anspruch 1,
wobei als Matrixmaterial ein Thermoplast oder ein Elastomer eingesetzt ist.

3. Hörgerät (1) nach Anspruch 1 oder 2,
wobei als Füllstoff ein Pulver aus Hartferrit eingesetzt ist.

4. Hörgerät (1) nach einem der Ansprüche 1 bis 3,
wobei der Antennenkern (80) als eine akustische Dichtung eingesetzt ist.

5. Hörgerät (1) nach einem der Ansprüche 1 bis 4,
wobei der Antennenkern (80) als ein mechanisch tragendes Bauteil eingesetzt ist.

6. Hörgerät (1) nach einem der Ansprüche 1 bis 5,
wobei der Antennenkern (80) ein mechanisches Verbindungselement aufweist.

7. Hörgerät (1) nach Anspruch 6,
wobei der Antennenkern (80) ein Verbindungselement zur Ausbildung einer Schraub- oder Schnappverbindung aufweist.

8. Hörgerät (1) nach einem der Ansprüche 1 bis 7,
wobei der Antennenkern (80) im Wesentlichen die Form eines beidseitig offenen Hohlzylinders (81) aufweist, der sich an einem Längsende zu einem Flansch (82) aufweitet, und
wobei ein Hörer (6) des Hörgeräts (1) auf dem Flansch (82) montierbar oder montiert ist, so dass von dem Hörer (6) abgegebener Schall in einem Schallkanal (84) im Inneren des Antennenkerns (80) geführt ist.

9. Hörgerät (1) nach einem der Ansprüche 1 bis 8,
- mit einem Gehäuse (2), das in einen Gehörgang einer das Hörgerät (1) tragenden Person einsetzbar ist,
- mit einem lösbar an dem Gehäuse (2) befestigten flexiblen Halteschirm (9) zur Halterung des Gehäuses (2) in dem Gehörgang, sowie
- mit einem gehäuseseitigen Verbindungselement (35), auf das der Halteschirm (9) mit einem korrespondierenden schirmseitigen Verbindungselement (36) aufsteckbar ist,
wobei das gehäuseseitige Verbindungselement (35) einstückig mit dem Antennenkern (80) verbunden ist.

10. Hörgerät (1) nach einem der Ansprüche 1 bis 9,
mit einem Gehäuse (2), das in einen Gehörgang einer das Hörgerät tragenden Person einsetzbar ist,
- wobei das Gehäuse (2) eine einteilige Gehäuseschale (15) umfasst, in der eine einen Hörer (6) sowie die Antenneneinrichtung (7) umfassende Baueinheit (25) aufgenommen ist,
- wobei die Gehäuseschale (15) eine erste frontseitige Öffnung (20), die mit einer Frontplatte (16) verschlossen ist, sowie eine der ersten Öffnung (20) im Wesentlichen gegenüberliegende zweite rückseitige Öffnung (21) aufweist,
- wobei die Baueinheit (25) mit einem Haltestutzen (27) aus der rückseitigen Öffnung (21) herausragt,
- wobei die Baueinheit (25) durch einen außenseitig auf den Haltestutzen (27) aufgesetzten Sicherungsring (30) an der Gehäuseschale (15) fixiert ist, und
- wobei der Haltestutzen (27) einstückig mit dem Antennenkern (80) verbunden ist.
